# FASCICULE DE BREVET EUROPEEN

(11) **EP 4 251 470 B1**
(45) Date de publication et mention de la délivrance du brevet: **07.01.2026**
(21) Numéro de dépôt: 21807102.5
(22) Date de dépôt: 10.11.2021
(51) Int. Cl.: B60N 2/879, B60N 2/00, B64D 11/06, B63B 29/04

(54) **SYSTEME DE CONTROLE SONORE POUR UN SIEGE**
TONSTEUERUNGSSYSTEM FÜR EINEN SITZ
SOUND CONTROL SYSTEM FOR A SEAT

(30) Priorité: 26.11.2020 FR 2012190
(43) Date de publication de la demande: 04.10.2023
(73) Titulaire: Safran Seats, 78370 Plaisir (FR)
(72) Inventeur: COTTA, Gérald, 77550 MOISSY-CRAMAYEL (FR); MANCEAU, Denis, 77550 MOISSY-CRAMAYEL (FR)
(74) Mandataire: Marconnet, Sébastien
(86) Numéro de dépôt international: PCT/EP2021/081252
(87) Numéro de publication internationale: WO 2022/112004

(56) Documents cités:
- EP-A1- 2 725 575
- FR-A1- 3 064 557
- JP-A- 2002 191 469
- US-A1- 2019 355 339
- US-B1- 10 061 557

## Description

La présente invention porte sur un système de contrôle sonore pour un siège. L'invention trouve une application particulièrement avantageuse, mais non exclusive, avec les sièges d'avion mais pourra également être mise en œuvre avec les sièges d'autres moyens de transport, notamment les voitures ou les bateaux.

Généralement, le passager d'un avion utilise un casque pour écouter un contenu multimédia (musique ou films) proposé par un système de type IFE (pour "In-Flight Entertainment" en anglais). Toutefois, le fait de porter un casque audio pendant une durée de vol importante, notamment au cours d'un vol ultra-long courrier, devient dérangeant pour le passager. En effet, après quelques heures posé sur la tête, un casque commence à se faire lourd et oppressant pour le passager.

Il existe des systèmes audiophoniques sans casque pour les sièges de véhicule offrant un bon niveau de qualité sonore et une bonne intelligibilité des dialogues de film. Toutefois, dans certaines situations de vie, ces systèmes sont susceptibles de générer un bruit potentiellement important pouvant déranger les autres passagers. En particulier, il a été observé que lorsque le passager n'est pas en position assise ou que la tête du passager n'est pas en contact avec l'appui-tête, les passagers voisins peuvent entendre davantage le son généré par les haut-parleurs intégrés dans l'appui-tête du siège. Cela est dû au fait que le corps du passager, en particulier sa tête, absorbe une partie du son diffusé par les haut-parleurs lorsqu'il est assis, et que cet effet d'absorption du son disparaît lorsque le passager quitte son siège.

Le document US10061557 décrit un système de contrôle de paramètres de diffusion de haut-parleurs dans un véhicule basé sur une détermination dynamique de l'état d'occupation d'une rangée arrière de sièges. Ce procédé repose sur une détection "tout ou rien" permettant de détecter soit un état d'occupation soit un état d'inoccupation d'un siège. Les paramètres de diffusion des haut-parleurs sont adaptés sélectivement en fonction de l'un de ces deux états d'occupation du siège.

Le document JP2002-191469 décrit un siège muni de haut-parleurs intégrés dans un appui-tête.

Le document GB1918524.8 décrit un système d'activation d'un mode d'annulation du bruit lorsque le passager s'endort. Ce document n'enseigne toutefois pas un pilotage spécifique des haut-parleurs en fonction d'un état général de la cabine.

Le document EP2725575 décrit un siège formant la base du préambule de la revendication 1.

L'invention vise à remédier efficacement aux inconvénients précités en proposant un siège comprenant les caractéristiques techniques énoncées dans la revendication 1.

L'invention permet ainsi d'adapter efficacement, en fonction de la présence ou non du passager ou de l'état de la cabine d'avion ou de l'avion, l'activation des haut-parleurs et/ou une caractéristique du signal sonore d'une solution sans casque, notamment le volume sonore, afin d'éviter de déranger les passagers voisins. L'invention permet également d'adapter une activation des haut-parleurs et/ou une caractéristique en fonction de la situation de vie de l'avion ou de la cabine, en particulier pour s'assurer que les messages du personnel de bord, en particulier les messages de sécurité, soient convenablement reçus par l'ensemble des passagers de l'avion.

Selon une mise en œuvre de l'invention, la caractéristique modifiée du signal sonore est un volume du signal sonore et/ou une ou plusieurs fréquences du signal sonore.

Selon une mise en œuvre de l'invention, l'unité de contrôle est configurée pour commander en outre un affichage de message, par exemple sur un écran d'un système multimédia, indiquant qu'une désactivation du haut-parleur et/ou une modification d'une caractéristique du signal sonore généré par le haut-parleur a été commandée par l'unité de contrôle.

Selon une mise en œuvre de l'invention, le moyen de détection est choisi parmi: une caméra, un capteur de détection notamment de type inductif, capacitif, piézoélectrique, infra-rouge, ou une nappe de détection notamment de type inductive, capacitive, piézoélectrique, infra-rouge.

Selon une mise en œuvre de l'invention, ledit siège comporte une pluralité de moyens de détection dont des signaux de sortie sont destinés à être corrélés par l'unité de contrôle pour confirmer l'information relative à une présence du passager ou d'une partie du corps du passager.

Selon une mise en œuvre de l'invention, le ou les moyens de détection sont disposés à l'intérieur d'au moins un élément du siège parmi: l'appui-tête, l'assise, le dossier, un accoudoir, ou une boucle de ceinture de sécurité.

Selon une mise en œuvre de l'invention, au moins un moyen de détection, notamment une caméra, est disposé dans une coque, ou dans la cabine d'avion à proximité du siège.

Selon une mise en œuvre de l'invention, au moins un haut-parleur est intégré dans une aile latérale de l'appui-tête et/ou dans une portion centrale de l'appui-tête.

Selon une mise en œuvre de l'invention, au moins un haut-parleur est intégré dans l'assise, le dossier, ou un accoudoir, ou dans une coque d'intimité du siège.

Selon une mise en œuvre de l'invention, l'unité de contrôle est configurée pour commander un réglage sonore du ou des haut-parleurs à un volume sonore optimal dans le cas où une annonce du personnel de bord, en particulier une annonce de sécurité, doit être effectuée via le ou les haut-parleurs du siège.

Selon une mise en œuvre de l'invention, l'unité de contrôle est configurée pour commander une mise en sourdine du ou des haut-parleurs du siège dans le cas où une annonce du personnel de bord, en particulier une annonce de sécurité, doit être effectuée via un haut-parleur de la cabine d'avion.

Selon une mise en œuvre de l'invention, l'unité de contrôle est configurée pour diminuer un volume sonore du ou des haut-parleurs de l'appui-tête et/ou afficher un message conseillant au passager de passer à une utilisation avec casque lorsqu'un niveau de bruit de la cabine ou d'une région de la cabine dépasse un seuil prédéterminé.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue d'un siège selon l'invention comportant des haut-parleurs ainsi que des capteurs de présence d'un passager ou d'une partie du corps du passager;
[Fig. 2a] [Fig. 2b] Les figures 2a et 2b sont des vues en perspective d'un appui-tête à haut-parleurs intégrés selon l'invention respectivement en position ouverte et en position repliée;
[Fig. 3] La figure 3 est une représentation schématique illustrant le contrôle du son des haut-parleurs du siège en fonction d'une présence ou non du passager sur un siège;
[Fig. 4] La figure 4 est une représentation schématique illustrant le contrôle du son des haut-parleurs du siège en fonction d'une présence de la tête du passager à proximité d'un appui-tête du siège;
[Fig. 5a] [Fig. 5b] [Fig. 5c] Les figures 5a à 5c sont des diagrammes illustrant la sélection d'un réglage de son des haut-parleurs en fonction de différentes situations détectées à partir des entrées prises en compte par l'unité de commande;
[Fig. 6] La figure 6 est un diagramme illustrant un mode de réalisation mettant en œuvre un système de détection de niveau de bruit dans la cabine ou dans une zone de la cabine.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

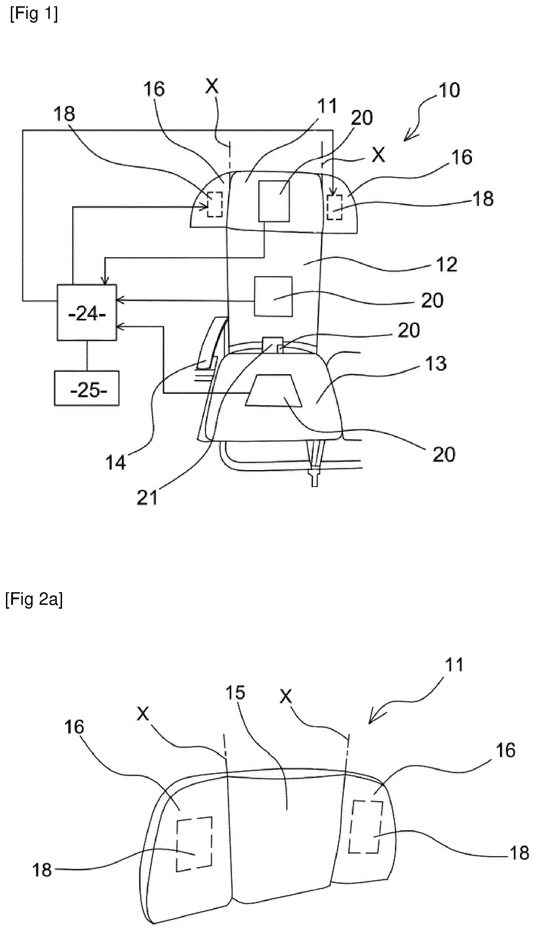

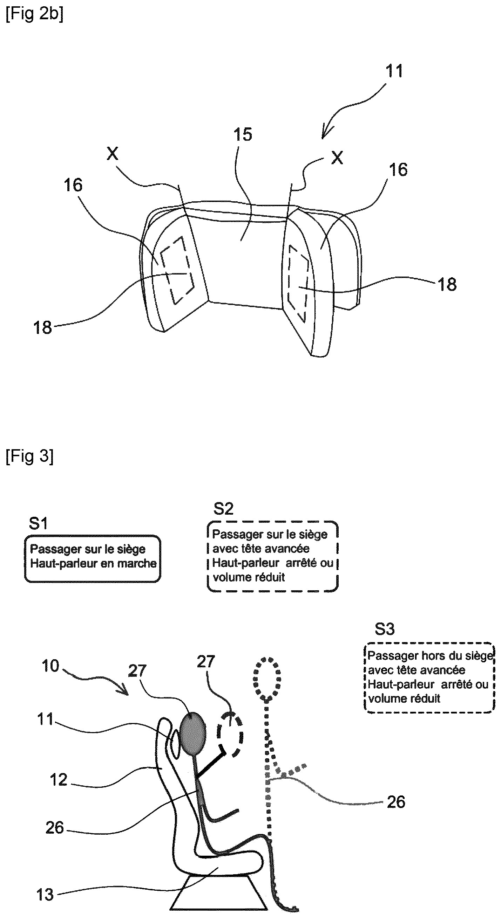

La figure 1 montre un siège de passager 10 destiné à être installé dans une cabine d'avion. Ce siège 10 comporte un appui-tête 11, un dossier 12, et une assise 13. Comme on peut le voir sur les figures 2a et 2b, l'appui-tête 11 pourra comporter une portion centrale 15 et deux ailes latérales 16 disposées de part et d'autre de la portion centrale 15 et articulées autour d'un axe de rotation X, via une charnière, par rapport à la portion centrale 15.

Au moins un haut-parleur 18 destiné à diffuser un contenu audiophonique pourra être intégré dans l'appui-tête 11. Par "intégré", on entend le fait que le haut-parleur 18 pourra être fixé directement ou indirectement par l'intermédiaire d'un boîtier à un élément structurel de l'appui-tête 11. Il est possible d'intégrer un ou plusieurs haut-parleurs 18 dans une aile latérale 16 de l'appui-tête 11.

Une aile latérale 16 de l'appui-tête 11 pourra être mobile en rotation entre une position ouverte dans laquelle les ailes latérales 16 se situent sensiblement dans le même plan que la portion centrale 15, c'est-à-dire qu'une aile latérale 16 forme un angle inférieur à 10 degrés par rapport au plan dans lequel s'étend la portion centrale 15 (cf. figure 2a), et une position repliée dans laquelle une aile latérale 16 forme un angle non nul, notamment compris entre 60 degrés et 80 degrés, par rapport au plan dans lequel s'étend la portion centrale 15 (cf. figure 2b).

Ainsi, en faisant passer les ailes latérales 16 de la position ouverte à la position repliée, l'utilisateur pourra rapprocher les haut-parleurs 18 de ses oreilles afin d'améliorer le rendu sonore du système.

Alternativement ou en complément, un ou plusieurs haut-parleurs 18 pourront être intégrés dans la portion centrale 15 de l'appui-tête 11. Il est également possible d'envisager l'intégration d'un ou plusieurs haut-parleurs 18 dans d'autres parties du siège 10, telles que l'assise 13, le dossier 12, ou un accoudoir 14, ou dans une coque d'intimité du siège 10 ou dans la cabine à proximité du siège 10.

Comme cela est illustré par la figure 1, le siège 10 comporte en outre au moins un moyen de détection 20 d'une présence d'un passager ou d'une partie du corps du passager. Le moyen de détection 20 est choisi parmi: une caméra, un capteur de détection notamment de type inductif, capacitif, piézoélectrique, infra-rouge ou une nappe de détection notamment de type inductive, capacitive, piézoélectrique, infra-rouge. La nappe de détection est un composant en deux dimensions comportant une pluralité de détecteurs élémentaires.

Le moyen de détection 20 pourra être disposé à l'intérieur d'au moins un élément du siège 10 parmi: l'appui-tête 11, l'assise 13, le dossier 12. Le moyen de détection 20 pourra être disposé derrière une housse de protection ou derrière une couche de mousse de l'appui-tête 11, du dossier 12, ou de l'assise 13.

Dans le cas où le moyen de détection 20 est disposé à l'intérieur de l'appui-tête 11, le moyen de détection 20 pourra être disposé notamment à l'intérieur d'une aile latérale 16 de l'appui-tête 11 ou d'une portion centrale 15 de l'appui-tête 11.

Alternativement, le moyen de détection 20 pourra être disposé à l'intérieur d'une boucle 21 de ceinture de sécurité ou d'un accoudoir 14 de façon à détecter une présence d'une main, d'un bras, ou d'un doigt du passager.

Dans le cas d'une caméra, cette dernière pourra être disposée dans la cabine d'avion à proximité du siège 10. La caméra pourra être configurée de façon à détecter le passager ou seulement la tête du passager.

Une unité de contrôle 24 est apte à commander sélectivement une activation ou une désactivation du haut-parleur 18 et/ou une modification d'une caractéristique d'un signal sonore généré par le haut-parleur 18 en fonction d'une information parmi: une information I_pres relative à une présence du passager ou d'une partie du corps du passager déterminée à l'aide du moyen de détection 20 ou une information I_ac d'état de l'avion ou de la cabine.

Suivant certains modes de réalisation, on pourra utiliser une pluralité de moyens de détection 20 dont des signaux de sortie sont destinés à être corrélés par l'unité de contrôle 24 pour confirmer l'information I_pres relative à une présence ou une absence du passager ou d'une partie du corps du passager. Les détecteurs multiples peuvent être du même type ou de types différents.

Avantageusement, la caractéristique modifiée du signal sonore est un volume du signal sonore. En variante ou en complément, il serait toutefois possible de modifier une ou plusieurs fréquences du signal sonore.

L'unité de contrôle 24 pourra être configurée pour commander en outre un affichage de message, par exemple sur un écran 25 d'un système multimédia (ou système IFE pour "Inflight Entertainment System" en Anglais) suite à une désactivation du haut-parleur 18 et/ou une modification d'une caractéristique du signal sonore généré par le haut-parleur 18.

Dans le mode de réalisation illustré par la figure 3, l'unité de contrôle 24 est configurée de telle façon que lorsqu'elle détecte, dans une situation de vie S1, que le passager 26 est assis sur le siège 10 et que sa tête 27 se situe à proximité de l'appui-tête 11, l'unité de contrôle 24 autorise une activation du haut-parleur 18 à un volume sonore optimal. Le passager 26 pourra ainsi régler le volume sonore au niveau souhaité.

Lorsque l'unité de contrôle 24 détecte que le passager 26 est assis sur son siège mais éloigne ou déplace sa tête 27 de l'appui-tête 11 (situation S2) ou que le passager 26 sort de son siège 10 (situation S3), ladite unité de contrôle 24 commande une désactivation des haut-parleurs 18, ou une réduction du volume sonore des haut-parleurs 18. En variante, l'unité de contrôle 24 pourra également faire varier une ou plusieurs fréquences du signal sonore des haut-parleurs dans une bande de fréquence inaudible pour les passagers voisins. En variante, l'unité de contrôle 24 pourra également commander un passage automatique d'une utilisation sans casque via le haut-parleur 18 à une utilisation normale avec casque.

Lorsque l'unité de contrôle 24 détecte que le passager 26 revient s'asseoir sur son siège 10 ou que la tête du passager 27 revient à proximité de l'appui-tête 11, l'unité de contrôle 24 réactive automatiquement, sans action du passager, les haut-parleurs 18 ou augmente le son au niveau préalablement réglé par le passager. Ainsi, la mise en œuvre du procédé est totalement transparente pour le passager.

Suivant une mise en œuvre simplifiée qui ne fait pas partie de l'invention, l'unité de contrôle 24 détecte uniquement la présence ou l'absence du passager sur son siège 10 et enclenche les actions de commande précitées des haut-parleurs en fonction de cela.

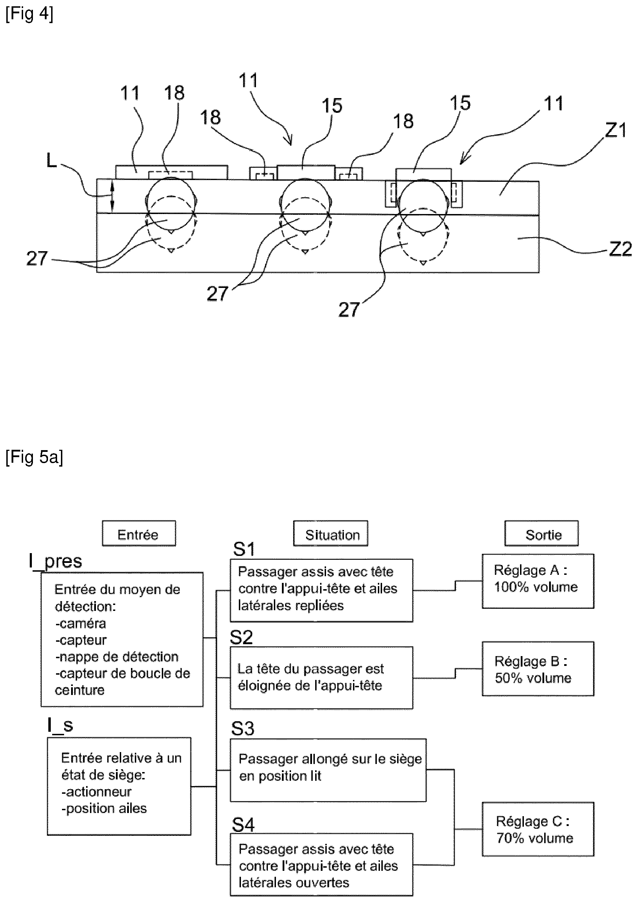

La figure 4 illustre la zone de détection Z1 dans laquelle on considère que la tête 27 du passager est à proximité de l'appui-tête 11. Cette zone de détection Z1 pourra présenter une largeur L comprise entre 5 et 20cm mesurée par rapport à une face d'appui de l'appui-tête 11. Une zone de détection Z1 pourra être ajustée en fonction d'une configuration de l'appui-tête 11 et du ou des haut-parleurs 18.

Lorsque la tête 27 du passager sort de la zone Z1 et entre dans la zone Z2, l'unité de contrôle 24 détecte que le passager éloigne sa tête 27 de l'appui-tête 11. L'unité de contrôle 24 commande alors une désactivation des haut-parleurs 18, ou une réduction du volume sonore des haut-parleurs 18 afin d'éviter de perturber les passagers voisins.

La zone de détection Z1 pourra être mise en œuvre avec un appui-tête 11 muni d'ailes latérales 16 ou dépourvu d'ailes latérales.

Les figures 5a à 5c illustrent différentes situations pouvant être détectées par l'unité de contrôle 24 en fonction d'entrée du système ainsi qu'une sélection d'un réglage de son des haut-parleurs 18 de l'appui-tête 11. Les réglages pourront être présélectionnés. On pourra par exemple prévoir cinq réglages présélectionnés (réglages A-E) décrits plus en détails ci-après.

Dans la mise en œuvre de la figure 5a, l'unité de contrôle 24 prend en compte une information I_pres relative à une présence du passager 26 via les signaux reçus par le ou les moyens de détection 20 ainsi qu'une information I_s relative à un état du siège 10. L'état du siège 10 est défini par la position du siège 10 qui pourra être en position assise 13 ou en position lit ainsi que par la position des ailes latérales 16 de l'appui-tête 11. A cet effet, des capteurs de position pourront être implantés au niveau des actionneurs du siège 10 et au niveau des charnières des ailes latérales 16.

Dans le cas où le système détecte, dans une situation S1, que le passager 26 est assis sur le siège 10 en ayant sa tête reposant contre l'appui-tête 11 et que les ailes latérales 16 se trouvent en position repliée, l'unité de contrôle 24 pourra sélectionner un premier réglage A des haut-parleurs 18 à un volume sonore optimal (niveau sonore à 100%), notamment situé autour de 60dB. Ce volume sonore est configurable par un paramétrage de mise au point.

Dans le cas où le système détecte, dans une situation S2, que le passager 26 n'a plus sa tête reposant contre l'appui-tête 11, l'unité de contrôle 24 pourra sélectionner un deuxième réglage B des haut-parleurs 18 à un volume sonore inférieur au volume sonore optimal, par exemple à un volume sonore de l'ordre de 50%. Ce volume sonore est configurable par un paramétrage de mise au point.

Dans le cas où le système détecte, dans une situation S3, que le passager 26 est étendu dans le siège 10 en position lit, l'unité de contrôle 24 pourra sélectionner un troisième réglage C des haut-parleurs 18 à un volume sonore inférieur au volume sonore optimal mais supérieur au volume sonore du réglage B, par exemple à un volume sonore de l'ordre de 70%. Ce volume sonore est configurable par un paramétrage de mise au point.

Dans le cas où le système détecte, dans une situation S4, que le passager 26 est assis sur le siège 10 alors que les ailes latérales 16 sont en position ouverte, l'unité de contrôle 24 pourra également sélectionner le troisième réglage C.

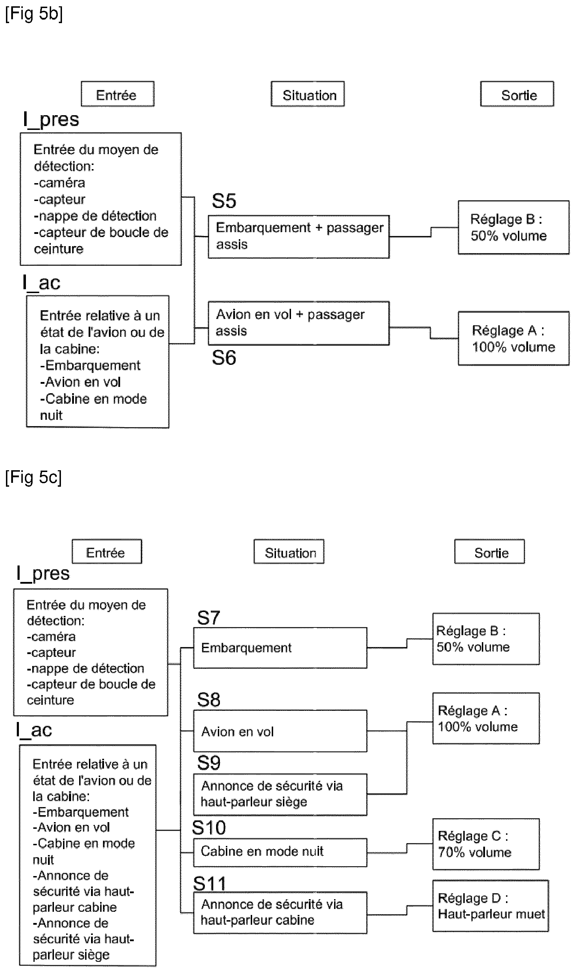

Dans la mise en œuvre de la figure 5b, l'unité de contrôle 24 prend en compte une information I_pres relative à une présence du passager 26 ou d'une partie de son corps, notamment la tête, via les signaux reçus par le ou les moyens de détection 20 ainsi qu'une information I_ac relative à un état de l'avion ou de la cabine. Cette information I_ac relative à un état de l'avion ou de la cabine pourra notamment consister en une information relative à une phase d'embarquement de l'avion, une information relative à une phase de vol de l'avion, ou une information relative à un mode nuit de la cabine.

L'unité de contrôle 24 pourra ainsi sélectionner un réglage des haut-parleurs 18 en fonction d'une combinaison de l'information I_pres relative à la présence du passager 26 et de l'information I_ac relative à un état de l'avion ou de la cabine. L'information I_ac relative à l'état de l'avion ou de la cabine est gérée par le personnel de bord qui pourra modifier son état.

Dans le cas où le système détecte, dans une situation S5, que l'avion est dans une phase d'embarquement et que le passager 26 est assis sur son siège 10, l'unité de contrôle 24 pourra sélectionner le deuxième réglage B des haut-parleurs 18.

Dans le cas où le système détecte, dans une situation S6, que l'avion est dans une phase de vol et que le passager 26 est assis sur son siège 10, l'unité de contrôle 24 pourra sélectionner le premier réglage A des haut-parleurs 18.

Dans la mise en œuvre de la figure 5c, l'unité de contrôle 24 prend en compte une information I_pres relative à une présence du passager 26 ou d'une partie de son corps via les signaux reçus par le ou les moyens de détection 20 ainsi qu'une information I_ac relative à un état de l'avion ou de la cabine. L'information I_ac relative à un état de l'avion ou de la cabine pourra notamment consister en une information relative à une phase d'embarquement de l'avion, une information relative à une phase de vol de l'avion, une information relative à un mode nuit de la cabine, une information relative à la diffusion d'un message de sécurité via les haut-parleurs 18 du siège 10, ou une information relative à la diffusion d'un message de sécurité via les haut-parleurs 18 de la cabine.

Dans le cas où l'unité de contrôle 24 détecte, dans une situation S7, que l'avion est dans une phase d'embarquement, l'unité de contrôle 24 pourra sélectionner le deuxième réglage B des haut-parleurs 18.

Dans le cas où le système détecte, dans une situation S8, que l'avion est dans une phase de vol, l'unité de contrôle 24 pourra sélectionner le premier réglage A des haut-parleurs 18.

Dans le cas où, dans une situation S9, une annonce du personnel de bord, en particulier une annonce de sécurité, doit être effectuée via les haut-parleurs 18 du siège 10, l'unité de contrôle 24 sélectionne également le premier réglage A des haut-parleurs 18 pour la diffusion de l'annonce. La diffusion de l'annonce du personnel de bord est effectuée à un volume sonore optimal quelle que soit la position du passager 26 par rapport au siège 10.

Dans le cas où, dans une situation S10, l'unité de contrôle 24 détecte que la cabine indique que la cabine est en mode nuit, l'unité de contrôle 24 sélectionne le troisième réglage C de façon à limiter le niveau sonore à 70% du volume. Cela permet de réduire le bruit global de la cabine. Ce niveau sonore est configurable par un paramétrage de mise au point.

Dans le cas où, dans une situation S11, une annonce du personnel de bord, en particulier une annonce de sécurité, doit être effectuée, via des haut-parleurs 18 de la cabine, l'unité de contrôle 24 commande une mise en sourdine des haut-parleurs 18 de l'appui-tête 11 (réglage D: niveau sonore à 0%), quelle que soit la position du passager 26 par rapport au siège 10.

Il est à noter que, mis à part pour la diffusion des messages du personnel de bord pour lesquels les niveaux sonores des haut-parleurs 18 sont imposés, les niveaux sonores des différents réglages A-D constituent des niveaux sonores maximum, le passager pouvant régler un niveau sonore inférieur au niveau sonore maximum par défaut.

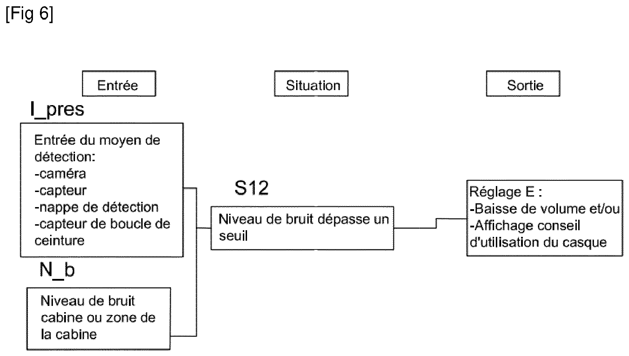

Dans la mise en œuvre de la figure 6, on prévoit un système de gestion du bruit pour l'ensemble de la cabine de l'avion ou pour des régions spécifiques de la cabine couvrant plusieurs sièges 10.

Dans ce cas, on utilise un détecteur de niveau de bruit N_b, par exemple un microphone, relié à une entrée de l'unité de contrôle 24. Lorsque l'unité de contrôle 24 détecte, dans une situation S12, que le niveau de bruit N_b de la cabine ou d'une région de la cabine dépasse un seuil prédéterminé, le niveau sonore des haut-parleurs 18 de l'appui-tête 11 (de tous les sièges 10 de la cabine ou des sièges 10 se trouvant dans la région de détection) est diminué et/ou un message est affiché pour conseiller au passager 26 de passer à une utilisation avec casque (cf. réglage E).

Bien entendu, les différentes caractéristiques, variantes et/ou formes de réalisation de la présente invention peuvent être associées les unes avec les autres selon diverses combinaisons dans la mesure où elles ne sont pas incompatibles ou exclusives les unes des autres et où l'objet résultant est compris dans le cadre défini par les revendications.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention qui est défini par les revendications, et notamment toutes combinaisons des différents modes de fonctionnement décrits précédemment, pouvant être pris séparément ou en association.

## Revendications

1. Siège de passager (10), notamment pour une cabine d'avion, comportant:
- un appui-tête (11),
- un dossier (12),
- une assise (13), et
- au moins un haut-parleur (18) intégré dans l'appui-tête (11) et destiné à diffuser un signal sonore à destination d'un passager (26),
- au moins un moyen de détection (20) d'une présence du passager (26) ou d'une partie du corps du passager (26), et
- une unité de contrôle (24) configurée pour commander sélectivement une activation ou une désactivation du haut-parleur (18) et/ou une modification d'une caractéristique d'un signal sonore diffusé par le haut-parleur (18) en fonction d'au moins une information parmi:
- une information relative à une présence du passager (26) ou d'une partie du corps du passager (26) déterminée à l'aide du moyen de détection (20), ou
- une information d'état de la cabine d'avion ou de l'avion,
ledit siège de passager (10) est **caractérisé en ce que**:
- l'unité de contrôle (24) est étent configurée de telle façon que lorsqu'elle détecte que la tête du passager (26) s'éloigne ou se déplace par rapport à l'appui-tête (11) alors que le passager (26) est assis, ladite unité de contrôle (24) est apte à commander une désactivation du haut-parleur (18), ou une réduction du volume sonore du haut-parleur (18), et
- lorsque l'unité de contrôle (24) détecte que la tête du passager (27) revient à proximité de l'appui-tête (11), l'unité de contrôle (24) est configurée pour réactiver automatiquement, sans action du passager, le haut-parleur (18) ou augmenter le son à un niveau préalablement réglé par le passager.

2. Siège selon la revendication 1, **caractérisé en ce que** la caractéristique modifiée du signal sonore est un volume du signal sonore et/ou une ou plusieurs fréquences du signal sonore.

3. Siège selon la revendication 1 ou 2, **caractérisé en ce que** l'unité de contrôle (24) est configurée pour commander en outre un affichage de message, par exemple sur un écran (25) d'un système multimédia, indiquant qu'une désactivation du haut-parleur (18) et/ou une modification d'une caractéristique du signal sonore généré par le haut-parleur (18) a été commandée par l'unité de contrôle (24).

4. Siège selon l'une quelconque des revendications 1 à 3, **caractérisé en ce que** le moyen de détection (20) est choisi parmi: une caméra, un capteur de détection notamment de type inductif, capacitif, piézoélectrique, infra-rouge, ou une nappe de détection notamment de type inductive, capacitive, piézoélectrique, infra-rouge.

5. Siège selon l'une quelconque des revendications 1 à 4, **caractérisé en ce qu'**il comporte une pluralité de moyens de détection (20) dont des signaux de sortie sont destinés à être corrélés par l'unité de contrôle (24) pour confirmer l'information relative à une présence du passager (26) ou d'une partie du corps du passager (26).

6. Siège selon l'une quelconque des revendications 1 à 5, **caractérisé en ce que** le ou les moyens de détection (20) sont disposés à l'intérieur d'au moins un élément du siège (10) parmi: l'appui-tête (11), l'assise (13), le dossier (12), un accoudoir (14), ou une boucle (21) de ceinture de sécurité.

7. Siège selon l'une quelconque des revendications 1 à 6, **caractérisé en ce qu'**au moins un moyen de détection (20), notamment une caméra, est disposé dans une coque, ou dans la cabine d'avion à proximité du siège (10).

8. Siège selon l'une quelconque des revendications 1 à 7, **caractérisé en ce qu'**au moins un haut-parleur (18) est intégré dans une aile latérale (16) de l'appui-tête (11) et/ou dans une portion centrale (15) de l'appui-tête (11).

9. Siège selon l'une quelconque des revendications 1 à 8, **caractérisé en ce qu'**au moins un haut-parleur (18) est intégré dans l'assise (13), le dossier (12), ou un accoudoir (14), ou dans une coque d'intimité du siège (10).

10. Siège selon l'une quelconque des revendications 1 à 9, **caractérisé en ce que** l'unité de contrôle (24) est configurée pour commander un réglage sonore du ou des haut-parleurs (18) à un volume sonore optimal dans le cas où une annonce du personnel de bord, en particulier une annonce de sécurité, doit être effectuée via le ou les haut-parleurs (18) du siège (10).

11. Siège selon l'une quelconque des revendications 1 à 9, **caractérisé en ce que** l'unité de contrôle (24) est configurée pour commander une mise en sourdine du ou des haut-parleurs (18) du siège (10) dans le cas où une annonce du personnel de bord, en particulier une annonce de sécurité, doit être effectuée via un haut-parleur (18) de la cabine d'avion.

12. Siège selon l'une quelconque des revendications 1 à 11, **caractérisé en ce que** l'unité de contrôle (24) est configurée pour diminuer un volume sonore du ou des haut-parleurs (18) de l'appui-tête (11) et/ou afficher un message conseillant au passager (26) de passer à une utilisation avec casque lorsqu'un niveau de bruit (N_b) de la cabine ou d'une région de la cabine dépasse un seuil prédéterminé.

## Patentansprüche

1. Passagiersitz (10), insbesondere für eine Flugzeugkabine, mit:
- einer Kopfstütze (11),
- einer Rückenlehne (12),
- einer Sitzbasis (13) und
- mindestens einen in die Kopfstütze (11) integrierten Lautsprecher (18) zur Ausgabe eines akustischen Signals an einen Passagier (26),
- mindestens ein Mittel (20) zum Erfassen der Anwesenheit des Passagiers (26) oder eines Körperteils des Passagiers (26), und
- eine Steuereinheit (24), die dazu konfiguriert ist, eine Aktivierung oder Deaktivierung des Lautsprechers (18) und/oder eine Änderung einer Charakteristik eines vom Lautsprecher (18) ausgegebenen Schallsignals in Abhängigkeit von mindestens einer Information aus folgenden Quellen selektiv zu steuern:
- einer mit Hilfe des Erfassungsmittels (20) ermittelten Information über die Anwesenheit des Passagiers (26) oder eines Körperteils des Passagiers (26), oder
- einer Information über den Status der Flugzeugkabine oder des Flugzeugs,
wobei der Passagiersitz (10) **dadurch gekennzeichnet ist, dass**:
- die Steuereinheit (24) so ausgebildet ist, dass sie bei Erkennung einer Wegbewegung des Kopfes (26) des Passagiers von der Kopfstütze (11) oder einer Relativbewegung desselben, während der Passagier (26) sitzt, eine Deaktivierung des Lautsprechers (18) oder eine Reduzierung der Lautstärke des Lautsprechers (18) steuern kann, und
- wenn die Steuereinheit (24) erkennt, dass der Kopf des Passagiers (27) wieder in die Nähe der Kopfstütze (11) kommt, ist die Steuereinheit (24) so ausgebildet, dass sie ohne Zutun des Passagiers automatisch den Lautsprecher (18) wieder aktiviert oder die Lautstärke auf eine zuvor vom Passagier eingestellte Lautstärke erhöht.

2. Sitz nach Anspruch 1, **dadurch gekennzeichnet, dass** die modifizierte Charakteristik des Schallsignals eine Lautstärke des Schallsignals und/oder eine oder mehrere Frequenzen des Schallsignals ist.

3. Sitz nach Anspruch 1 oder 2, **dadurch gekennzeichnet, dass** die Steuereinheit (24) so ausgebildet ist, dass sie ferner eine Meldungsanzeige, beispielsweise auf einem Bildschirm (25) eines Multimediasystems, steuert, die anzeigt, dass eine Deaktivierung des Lautsprechers (18) und/oder eine Änderung einer Charakteristik des vom Lautsprecher (18) erzeugten Schallsignals durch die Steuereinheit (24) gesteuert wurde.

4. Sitz nach einem der Ansprüche 1 bis 3, **dadurch gekennzeichnet, dass** das Erfassungsmittel (20) ausgewählt ist aus: einer Kamera, einem Erfassungssensor, insbesondere vom induktiven, kapazitiven, piezoelektrischen oder Infrarottyp, oder einer Erfassungsblende, insbesondere vom induktiven, kapazitiven, piezoelektrischen Typ oder Infrarottyp.

5. Sitz nach einem der Ansprüche 1 bis 4, **dadurch gekennzeichnet, dass** er mehrere Erfassungsmittel (20) umfasst, deren Ausgangssignale von der Steuereinheit (24) korreliert werden sollen, um die Information über die Anwesenheit des Passagiers (26) oder eines Körperteils des Passagiers (26) zu bestätigen.

6. Sitz nach einem der Ansprüche 1 bis 5, **dadurch gekennzeichnet, dass** das oder die Erfassungsmittel (20) im Inneren mindestens eines Elements des Sitzes (10) von der Kopfstütze (11), der Sitzbasis (13), der Rückenlehne (12), einer Armlehne (14) oder eines Sicherheitsgurtschlosses (21) angeordnet ist/sind.

7. Sitz nach einem der Ansprüche 1 bis 6, **dadurch gekennzeichnet, dass** mindestens ein Erfassungsmittel (20), insbesondere eine Kamera, in einer Schale oder in der Flugzeugkabine in der Nähe des Sitzes (10) angeordnet ist.

8. Sitz nach einem der Ansprüche 1 bis 7, **dadurch gekennzeichnet, dass** mindestens ein Lautsprecher (18) in einem seitlichen Flügel (16) der Kopfstütze (11) und/oder in einem Mittelteil (15) der Kopfstütze (11) integriert ist.

9. Sitz nach einem der Ansprüche 1 bis 8, **dadurch gekennzeichnet, dass** mindestens ein Lautsprecher (18) in der Sitzbasis (13), der Rückenlehne (12) oder einer Armlehne (14) oder einer Sichtschutzschale des Sitzes (10) integriert ist.

10. Sitz nach einem der Ansprüche 1 bis 9, **dadurch gekennzeichnet, dass** die Steuereinheit (24) so ausgebildet ist, dass sie eine Schallregelung des oder der Lautsprecher(s) (18) auf eine optimale Lautstärke steuert, falls über den/die Lautsprecher (18) im Sitz (10) eine Mitteilung des Flugpersonals, insbesondere eine Sicherheitsmitteilung, erfolgen soll.

11. Sitz nach einem der Ansprüche 1 bis 9, **dadurch gekennzeichnet, dass** die Steuereinheit (24) so ausgebildet ist, dass sie eine Stummschaltung des/der Lautsprecher(s) (18) im Sitz (10) steuert, falls eine Mitteilung des Flugpersonals, insbesondere eine Sicherheitsmitteilung, über einen Lautsprecher (18) in der Flugzeugkabine erfolgen muss.

12. Sitz nach einem der Ansprüche 1 bis 11, **dadurch gekennzeichnet, dass** die Steuereinheit (24) so ausgebildet ist, dass sie die Lautstärke des/der Lautsprecher(s) (18) in der Kopfstütze (11) reduziert und/oder eine Meldung anzeigt, die dem Passagier (26) empfiehlt, auf die Verwendung von Kopfhörern umzuschalten, wenn ein Geräuschpegel (N_b) in der Kabine oder einem Bereich der Kabine einen vorgegebenen Schwellenwert überschreitet.

## Claims

1. A passenger seat (10), in particular for an aircraft cabin, comprising:
- a headrest (11),
- a backrest (12),
- a seating base (13), and
- at least one loudspeaker (18) integrated in the headrest (11) for emitting an audible signal to a passenger (26),
- at least one means (20) for detecting the presence of the passenger (26) or a part of the passenger's body (26), and
- a control unit (24) configured to selectively control an activation or a deactivation of the loudspeaker (18) and/or a modification of a characteristic of a sound signal emitted by the loudspeaker (18) as a function of at least one information from:
- an information about the presence of the passenger (26) or a part of the passenger's body (26) determined with the help of the detection means (20), or
- an information about the status of the aircraft cabin or the aircraft,
said passenger seat (10) being **characterized in that**:
- the control unit (24) is configured such that when it detects that the passenger's head (26) moves away or moves relative to the headrest (11) while the passenger (26) is seated, said control unit (24) is able to control a deactivation of the loudspeaker (18), or a reduction in the volume of the loudspeaker (18), and
- when the control unit (24) detects that the passenger's head (27) comes back near the headrest (11), the control unit (24) is configured to automatically reactivate, without any passenger's action, the loudspeaker (18) or increase the sound to a level previously set by the passenger.

2. The seat according to claim 1, **characterized in that** the modified characteristic of the sound signal is a volume of the sound signal and/or one or more frequencies of the sound signal.

3. The seat according to claim 1 or 2, **characterized in that** the control unit (24) is configured to further control a message display, for example on a screen (25) of a multimedia system, indicating that a deactivation of the loudspeaker (18) and/or a modification of a characteristic of the sound signal generated by the loudspeaker (18) has been controlled by the control unit (24).

4. The seat according to any one of the claims 1 to 3, **characterized in that** the detection means (20) is chosen from: a camera, a detection sensor, in particular of the inductive, capacitive, piezoelectric, infrared type, or a detection screen, in particular of the inductive, capacitive, piezoelectric, infrared type.

5. The seat according to any one of the claims 1 to 4, **characterized in that** it comprises a plurality of detection means (20) whose output signals are intended to be correlated by the control unit (24) to confirm the information about the presence of the passenger (26) or a part of the body of the passenger (26).

6. The seat according to any one of the claims 1 to 5, **characterized in that** the detection means (20) are arranged inside at least one element of the seat (10) from: the headrest (11), the seating base (13), the backrest (12), an armrest (14), or a seat belt buckle (21).

7. The seat according to any one of the claims 1 to 6, **characterized in that** at least one detection means (20), in particular a camera, is arranged in a shell, or in the aircraft cabin near the seat (10).

8. The seat according to any one of the claims 1 to 7, **characterized in that** at least one loudspeaker (18) is integrated in a lateral wing (16) of the headrest (11) and/or in a central portion (15) of the headrest (11).

9. The seat according to any one of the claims 1 to 8, **characterized in that** at least one loudspeaker (18) is integrated in the seating base (13), the backrest (12), or an armrest (14), or in a privacy shell of the seat (10).

10. The seat according to any one of the claims 1 to 9, **characterized in that** the control unit (24) is configured to control a sound adjustment of the loudspeaker(s) (18) to an optimal sound volume in the event that an announcement by the flight personnel, in particular a safety announcement, is to be made via the loudspeaker(s) (18) in the seat (10).

11. The seat according to any one of the claims 1 to 9, **characterized in that** the control unit (24) is configured to control a muting of the loudspeaker(s) (18) in the seat (10) in the event that an announcement by the flight personnel, in particular a safety announcement, must be made via a loudspeaker (18) in the aircraft cabin.

12. The seat according to any one of the claims 1 to 11, **characterized in that** the control unit (24) is configured to reduce a sound volume of the loudspeaker(s) (18) in the headrest (11) and/or display a message advising the passenger (26) to switch to a use with headphones when a noise level (N_b) in the cabin or a region of the cabin exceeds a predetermined threshold.
